# EUROPEAN PATENT SPECIFICATION

(11) **EP 4 559 634 B1**
(45) Date of publication and mention of the grant of the patent: **20.05.2026**
(21) Application number: 24210351.3
(22) Date of filing: 01.11.2024
(51) Int. Cl.: B25J 9/00, B25J 9/04, B25J 18/00, B25J 19/00

(54) **ROBOT**
ROBOTER
ROBOT

(30) Priority: 24.11.2023 JP 2023199193
(43) Date of publication of application: 28.05.2025
(73) Proprietor: Kabushiki Kaisha Yaskawa Denki, Kitakyushu-shi, Fukuoka 806-0004 (JP)
(72) Inventor: TANAKA, Yuto, Fukuoka 806-0004 (JP); MIHARA, Nobuhiko, Fukuoka 806-0004 (JP); TATSUGUCHI, Mayu, Fukuoka 806-0004 (JP); SAITO, Hiroshi, Fukuoka 806-0004 (JP); MATSUURA, Hidenori, Fukuoka 806-0004 (JP)
(74) Representative: Viering, Jentschura & Partner mbB Patent- und Rechtsanwälte

(56) References cited:
- US-A1- 2016 221 184

## Description

### TECHNICAL FIELD

The present disclosure relates to a robot.

### BACKGROUND

Japanese Unexamined Patent Publication No. 2012-161868 discloses a robot including a base, a first structure, a second structure, and a third structure. The first structure is coupled to the base to be rotatable around a first axis. The second structure is coupled to the first structure to be rotatable around a second axis orthogonal to the first axis. The third structure is coupled to the second structure to be rotatable around a third axis parallel to the second axis. The second structure includes a main structural portion, an auxiliary structural portion, and a coupling portion that couples the main structural portion to the auxiliary structural portion. Each of the first structure and the third structure is sandwiched between the main structural portion and the auxiliary structural portion.

US 2016/221184 A1 discloses a robot comprising: a first link; a second link aligned with the first link along a rotation axis and extending away from the rotation axis; and an actuator accommodated in the first link to rotate the second link around the rotation axis with respect to the first link, wherein the second link includes a first sub-link and a second sub-link that sandwich the actuator along the rotation axis, the first sub-link is attached to the actuator, and the second sub-link is attached to the first sub-link in a state where the second sub-link is not constrained from the first link in a direction crossing the rotation axis.

### SUMMARY

### Technical Problem

The present disclosure provides a robot effective in reducing unevenness in an appearance and improving positioning accuracy.

### Solution to Problem

The present invention provides a robot according to the independent claim 1. The dependent claims show further preferred embodiments of the said robot. The robot includes a first link, a second link aligned with the first link along a rotation axis and extending away from the rotation axis, and an actuator accommodated in the first link to rotate the second link around the rotation axis with respect to the first link. The second link includes a first sub-link and a second sub-link that sandwich the actuator along the rotation axis, the first sub-link is attached to the actuator, and the second sub-link is attached to the first sub-link in a state where the second sub-link is not constrained from the first link in a direction crossing the rotation axis. The first link includes an internal space configured to accommodate the actuator, and an opening configured to allow the internal space and an outside of the internal space to communicate with each other. The robot further comprises a seal interposed between the second sub-link and the first link around the opening.

### Advantageous Effects of Invention

According to the present disclosure, the robot effective in reducing the unevenness in the appearance and improving the positioning accuracy is provided.

### BRIEF DESCRIPTION OF THE DRAWINGS

FIG. 1 is a perspective view illustrating an example of a robot;
FIG. 2 is a perspective view illustrating an example of a robot;
FIG. 3 is a sectional view illustrating an example of an inside of a robot;
FIG. 4 is a perspective view illustrating an example of a drive link;
FIG. 5 is a side view illustrating an example of a drive link;
FIG. 6 is a side view schematically illustrating an example of a drive link;
FIG. 7 is a sectional view schematically illustrating an example of a seal provided between links;
FIG. 8 is a perspective view illustrating a part of a robot in a state where a cover is detached;
FIG. 9 is a sectional view illustrating an example of an inside of a turning link;
FIG. 10 is a perspective view illustrating a part of a robot in a state where a cover is detached; and
FIG. 11 is a sectional view schematically illustrating an example of a bearing provided between links.

### DETAILED DESCRIPTION

Hereinafter, embodiments will be described with reference to the drawings. In the description, identical elements or elements having identical functions are denoted by identical reference signs, and redundant description will be omitted.

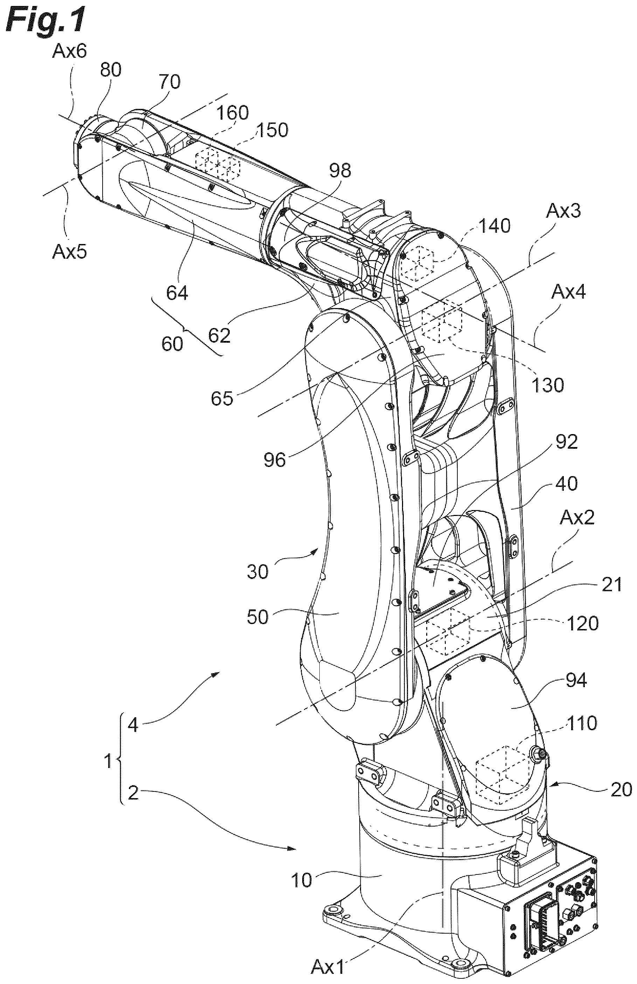

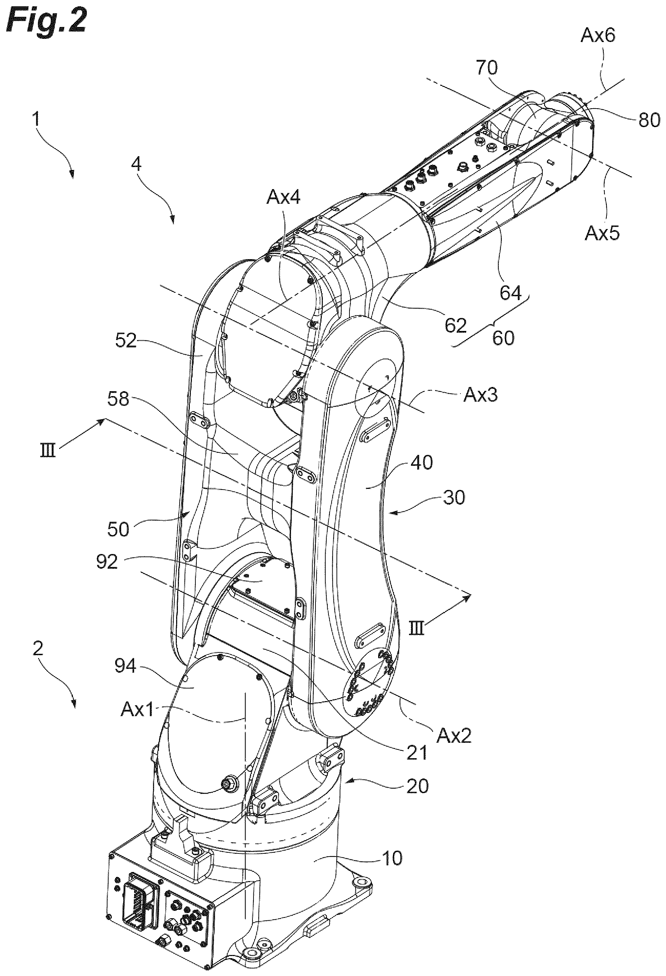

FIGS. 1 and 2 illustrate a robot according to an embodiment. A robot 1 illustrated in FIG. 1 is a vertical articulated robot. The robot 1 automatically performs various works on a work object. The robot 1 is, for example, an industrial robot, and in one example, automatically executes various conveyance, machining, assembly, or the like on components or assemblies in production lines of products. The application of the robot 1 is not limited to industrial use. Hereinafter, an outline of a structure of the robot 1 will be first described, and then details of some members included in the robot 1 will be described.

### [Outline of Robot Structure]

The robot 1 includes a base portion 2 and an articulated arm 4. The base portion 2 is a portion that supports the articulated arm 4. The articulated arm 4 is attached to the base portion 2 in a state of being rotatable and includes serial link structures.

The base portion 2 includes a base link 10 and a turning link 20. The base link 10 is also referred to as a base, and is fixed to an installation surface. The installation surface may be one surface forming a work area where a work by the robot 1 is performed. The installation surface is, for example, a bottom surface of the work area. The base link 10 may be fixed to a horizontal installation surface. The base link 10 may be fixed to an installation surface on a moving body such as an automatic guided vehicle (AGV).

The turning link 20 is connected to the base link 10 to rotate (turn) around a rotation axis Ax1 (turning axis). The turning link 20 is attached to the base link 10 to be positioned above the base link 10, for example. The rotation axis Ax1 may be set to pass through the base link 10 and the turning link 20. The turning link 20 may be provided on the base link 10 to rotate around the vertical rotation axis Ax1.

In the present disclosure, "upper" and "lower" are used to indicate an arrangement relationship when the structure of the robot 1 is described. "Upper" and "lower" mean "upper" and "lower" in a state where the rotation axis Ax1 is positioned vertically and the turning link 20 is positioned on the base link 10, but the base portion 2 may not necessarily be arranged in this manner. The base portion 2 may be arranged, for example, such that the turning link 20 is positioned below the base link 10 or such that the turning link 20 is positioned on a side of the base link 10. The base link 10 may be fixed to a wall surface of the work area or may be fixed to a ceiling surface of the work area.

The articulated arm 4 includes, for example, an arm link 30, an arm link 60, an arm link 70, and a tool attachment portion 80. Each of the arm link 30, the arm link 60, and the arm link 70 is also simply referred to as an arm.

The arm link 30 is connected to the turning link 20 to rotate around a rotation axis Ax2. The rotation axis Ax2 crosses, for example, the rotation axis Ax1. In the present disclosure, "crossing" also includes a skew relationship like a so-called grade separation. The arm link 30 may extend away from the rotation axis Ax2. The arm link 30 (second link) may be aligned with the turning link 20 (first link) along the rotation axis Ax2. The rotation axis Ax2 may be orthogonal to the rotation axis Ax1. The rotation axis Ax2 may be set to pass through a proximal end portion of the arm link 30 and the turning link 20.

The arm link 60 is connected to the arm link 30 to rotate around a rotation axis Ax3 (second rotation axis) parallel to the rotation axis Ax2. The arm link 60 is connected to, for example, a distal end portion (end portion) of the arm link 30. The arm link 60 may extend away from the rotation axis Ax3. The arm link 60 (third link) may be aligned with the arm link 30 along the rotation axis Ax3. The rotation axis Ax3 may be set to pass through the distal end portion of the arm link 30 and a proximal end portion of the arm link 60.

The arm link 60 includes an arm base portion 62 and a turning arm 64. The arm base portion 62 (third link) is a link connected to the distal end portion of the arm link 30 so as to rotate around the rotation axis Ax3. The arm base portion 62 may extend away from the rotation axis Ax3. The arm base portion 62 may be aligned with the arm link 30 along the rotation axis Ax3. The turning arm 64 (fourth link) is a link connected to the arm base portion 62 to rotate around a rotation axis Ax4 crossing the rotation axis Ax3. The turning arm 64 may extend from the arm base portion 62 along a direction in which the arm base portion 62 extends. The rotation axis Ax4 may be orthogonal to the rotation axis Ax3. The rotation axis Ax4 may be set to pass through the arm base portion 62 and the turning arm 64.

The arm link 70 is connected to the arm link 60 to rotate around a rotation axis Ax5 crossing the rotation axis Ax4. The arm link 70 is attached to, for example, a distal end portion of the turning arm 64 of the arm link 60. The rotation axis Ax5 may be orthogonal to the rotation axis Ax4. The rotation axis Ax5 may be set to pass through the distal end portion of the turning arm 64 and the arm link 70.

The tool attachment portion 80 is connected to the arm link 70 to rotate around a rotation axis Ax6 crossing the rotation axis Ax5. The rotation axis Ax6 may be orthogonal to the rotation axis Ax5. The rotation axis Ax6 may be set to pass through the arm link 70 and the tool attachment portion 80. A working tool is attached to the tool attachment portion 80. An example of the working tool is a suction nozzle configured to suck a workpiece, a hand configured to grip a workpiece, a welding torch, a screw tightening tool, or a polishing tool.

The robot 1 includes an actuator 110, an actuator 120, an actuator 130, an actuator 140, an actuator 150, and an actuator 160. In FIG. 1, each actuator is schematically illustrated by a broken line in a simplified manner, and a diagram of each actuator is omitted in FIG. 2. Each actuator may include a motor and a speed reducer.

The actuator 110 rotates the turning link 20 around the rotation axis Ax1 with respect to the base link 10. The actuator 120 rotates the arm link 30 around the rotation axis Ax2 with respect to the turning link 20. The actuator 130 (second actuator) rotates the arm base portion 62 of the arm link 60 around the rotation axis Ax3 with respect to the arm link 30.

The actuator 140 rotates the turning arm 64 of the arm link 60 around the rotation axis Ax4 with respect to the arm base portion 62. The actuator 150 rotates the arm link 70 around the rotation axis Ax5 with respect to the turning arm 64 of the arm link 60. The actuator 160 rotates the tool attachment portion 80 around the rotation axis Ax6 with respect to the arm link 70.

### [Arm Link]

Next, a structure of the arm link 30 and some members positioned inside or around the arm link 30 will be described in detail. The arm link 30 may include two sub-links. As illustrated in FIG. 1 or 2, the arm link 30 may include a drive link 40 (link) and an auxiliary link 50 as two sub-links.

The drive link 40 (first sub-link) and the auxiliary link 50 (second sub-link) may sandwich the actuator 120 along the rotation axis Ax2. In a case where the members are observed on the rotation axis Ax2, the drive link 40, the actuator 120, and the auxiliary link 50 may be arranged in this order. The drive link 40 and the auxiliary link 50 may sandwich the actuator 130 along the rotation axis Ax3. When the members are observed on the rotation axis Ax3, the drive link 40, the actuator 130, and the auxiliary link 50 may be arranged in this order.

The auxiliary link 50 may be made of a material (second material) having rigidity and specific gravity smaller than a material (first material) forming the drive link 40. The rigidity of the material forming the auxiliary link 50 may be smaller than the rigidity of the material forming the drive link 40, and the specific gravity of the material forming the auxiliary link 50 may be smaller than the specific gravity of the material forming the drive link 40. For example, in a case where the material forming the drive link 40 is a material containing iron, the material forming the auxiliary link 50 is a material containing aluminum. A thermal expansion coefficient (linear expansion coefficient) may be different between the material forming the drive link 40 and the material forming the auxiliary link 50.

### <Drive Link>

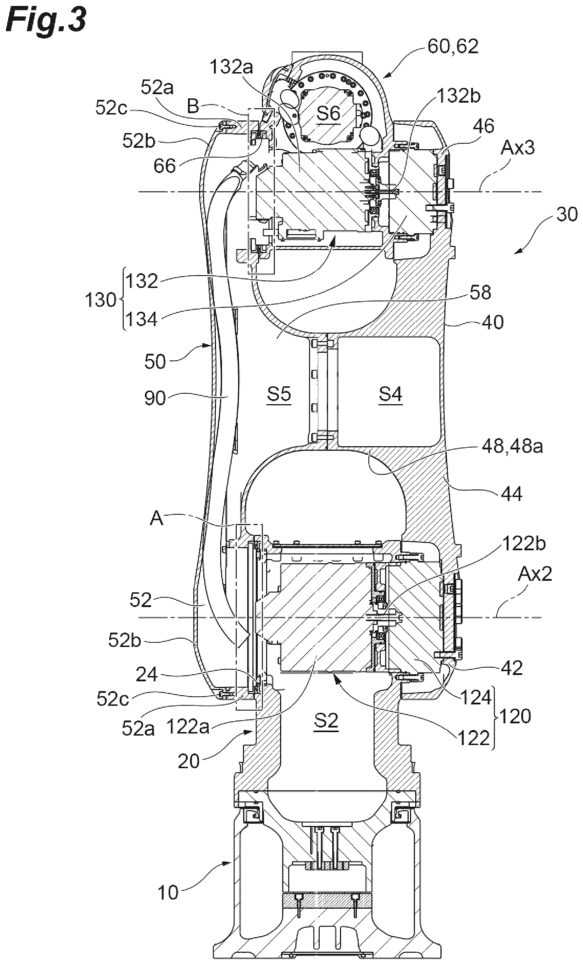

The drive link 40 is a link driven by the actuator 120. For example, a driving force by the actuator 120 is directly transmitted to the drive link 40. The drive link 40 may be connected to the turning link 20. The actuator 120 rotates the drive link 40 around the rotation axis Ax2 with respect to the turning link 20. FIG. 3 illustrates a section taken along line III-III drawn in FIG. 2. The actuator 120 is connected to any portion of the drive link 40. The drive link 40 (second link) may be aligned with the turning link 20 (first link) along the rotation axis Ax2. The drive link 40 may extend away from the rotation axis Ax2.

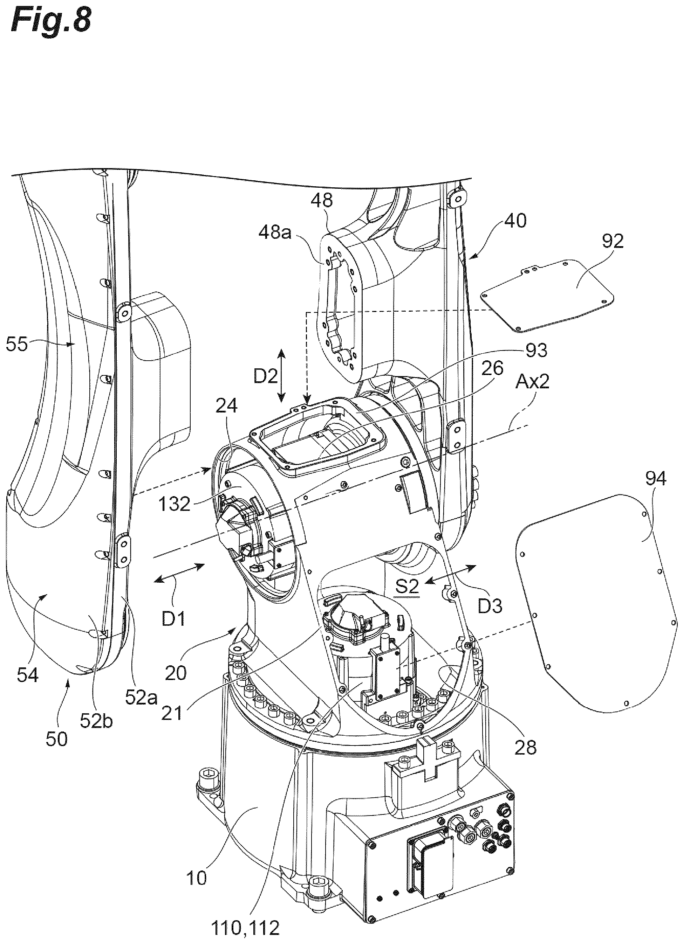

The actuator 120 may be accommodated in the turning link 20. The turning link 20 may include an internal space S2 and an opening 24 (see also FIG. 8). The internal space S2 is a space for accommodating the actuator 120. At least a part of the actuator 120 may be accommodated in the internal space S2. The turning link 20 includes a housing 21. The housing 21 is constituted by a wall forming the internal space S2. The opening 24 is an opening formed in the housing 21.

In FIG. 3, the motor included in the actuator 120 is indicated by "122", and the speed reducer included in the actuator 120 is indicated by "124". The motor 122 includes a motor body 122a and an output shaft 122b. The motor 122 rotates the drive link 40 around the rotation axis Ax2 with respect to the turning link 20. The motor 122 may be accommodated in the internal space S2 in the turning link 20. The motor 122 may be arranged such that the motor body 122a is accommodated in the internal space S2 in the turning link 20. The motor 122 may be installed such that the output shaft 122b is horizontal. The output shaft 122b of the motor 122 is connected to the speed reducer 124. In one example, an output shaft of the speed reducer 124 of the actuator 120 is connected to the drive link 40.

The actuator 130 for driving the arm base portion 62 of the arm link 60 rotates the arm base portion 62 around the rotation axis Ax3 with respect to the drive link 40 of the arm link 30. The actuator 130 is connected to any portion of the drive link 40. For example, a driving force by the actuator 130 is applied to the drive link 40, and thus, the arm base portion 62 rotates with respect to the drive link 40. The arm base portion 62 (second link) of the arm link 60 may be connected to an end portion of the drive link 40. The arm base portion 62 (second link) of the arm link 60 may be aligned with the drive link 40.

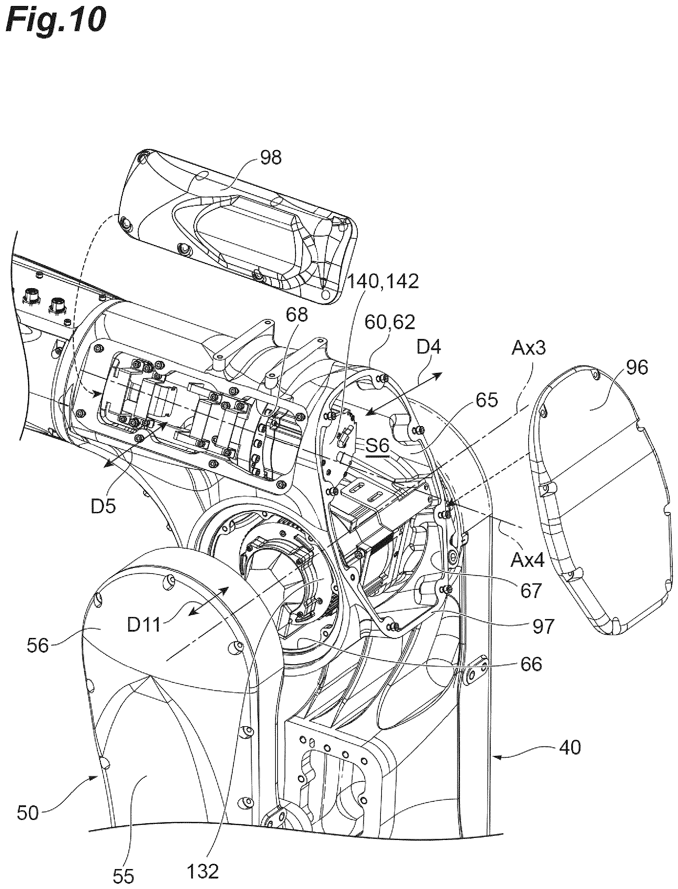

The actuator 130 may be accommodated in the arm base portion 62 of the arm link 60. The arm base portion 62 of the arm link 60 may include an internal space S6 and an opening 66 (see also FIG. 10). The internal space S6 is a space for accommodating the actuator 130. At least a part of the actuator 130 may be accommodated in the internal space S6. The arm base portion 62 of the arm link 60 has a housing 65. The housing 65 is constituted by a wall forming the internal space S6. The opening 66 is an opening formed in the housing 65.

In FIG. 3, the motor included in the actuator 130 is indicated by "132", and the speed reducer included in the actuator 130 is indicated by "134". The motor 132 includes a motor body 132a and an output shaft 132b. The motor 132 (second motor) rotates the arm base portion 62 around the rotation axis Ax3 with respect to the drive link 40. The motor 132 may be accommodated in the arm base portion 62. The motor 132 may be arranged such that the motor body 132a is accommodated in the internal space S6 in the arm base portion 62. The motor 132 may be installed such that the output shaft 132b is horizontal. The output shaft 132b of the motor 132 is connected to the speed reducer 134. In one example, an output shaft of the speed reducer 134 of the actuator 130 is connected to the drive link 40.

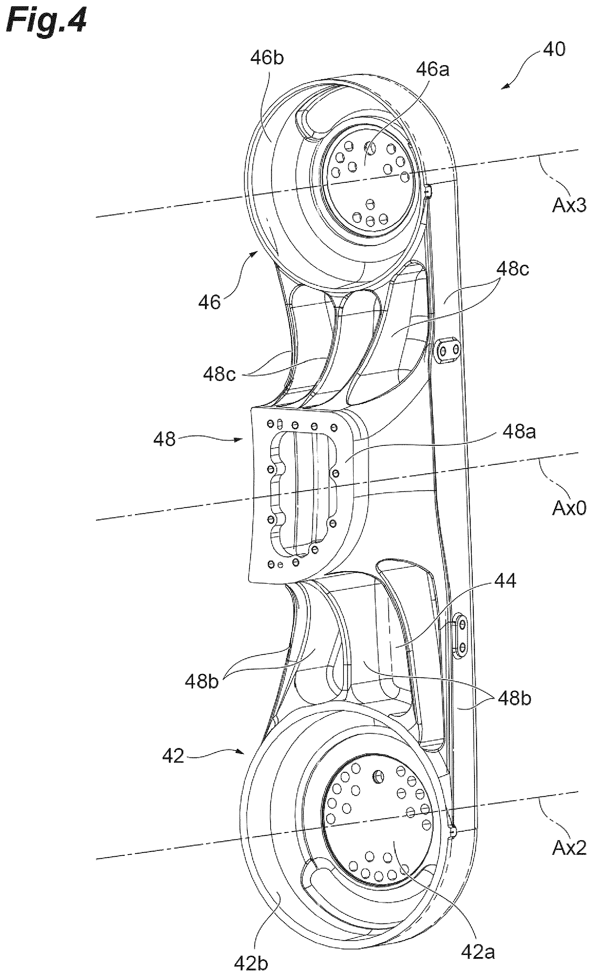

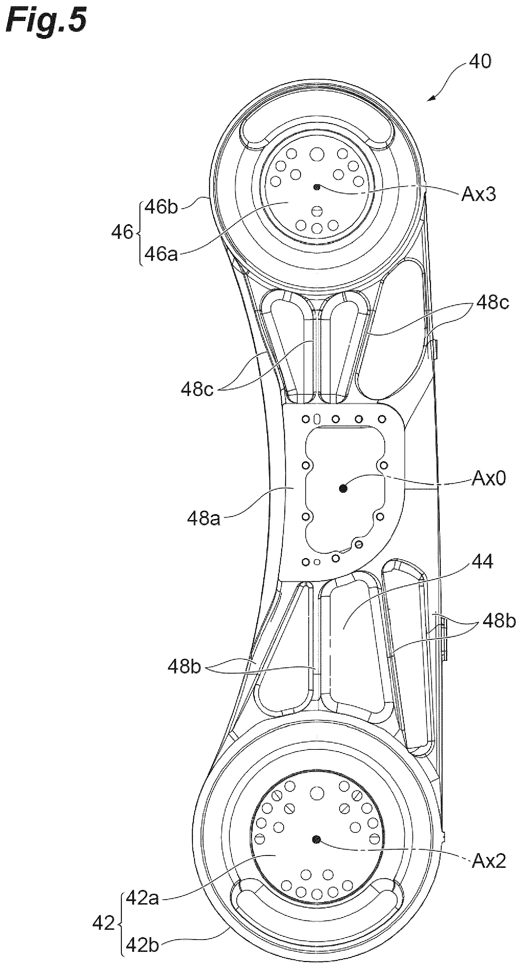

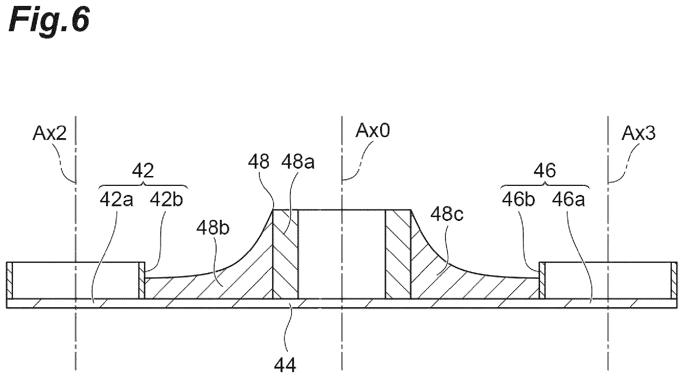

FIG. 4 illustrates a perspective view of the drive link 40, and FIG. 5 illustrates a side view of the drive link 40 as viewed from a direction along the rotation axis Ax2. FIG. 6 is a schematic view in a case where a side surface of the drive link 40 is viewed from a direction orthogonal to a plane including the rotation axis Ax2 and the rotation axis Ax3. As illustrated in FIG. 4 and the like, the drive link 40 is formed to extend over both the rotation axis Ax2 and the rotation axis Ax3. A direction in which the entire drive link 40 extends may be along a line segment connecting the rotation axis Ax2 and the rotation axis Ax3 at a shortest distance.

The drive link 40 may be attached to the actuator 120. The drive link 40 may be attached to the actuator 130. The drive link 40 includes, for example, a connecting section 42, a connecting section 46, a link base section 44, and a reinforcing section 48. In a case where the drive link 40 is observed from the rotation axis Ax2 toward the rotation axis Ax3, the connecting section 42, the link base section 44, and the connecting section 46 are aligned in this order.

The connecting section 42 is a portion connected to the actuator 120. For example, the output shaft of the speed reducer 124 of the actuator 120 is connected to the connecting section 42. The connecting section 42 may include a connecting base section 42a and a surrounding wall 42b. A space for accommodating at least a part of the actuator 120 (for example, the speed reducer 124 of the actuator 120) is formed by the connecting base section 42a and the surrounding wall 42b.

The connecting base section 42a is a portion connected to the actuator 120. For example, the output shaft of the speed reducer 124 of the actuator 120 is connected to the connecting base section 42a. The connecting base section 42a may be formed to spread along a plane crossing the rotation axis Ax2. A thickness of the connecting base section 42a may not be constant, and at least a part of each of a pair of main surfaces of the connecting base section 42a may not be a plane. A shape of the connecting base section 42a may be circular as viewed from the rotation axis Ax2.

The surrounding wall 42b is a portion protruding from the connecting base section 42a to surround at least a part of the actuator 120. The surrounding wall 42b is formed in an annular shape to surround at least a part of the speed reducer 124, for example. The surrounding wall 42b protrudes in a predetermined direction from an outer edge portion (outer edge and a portion in the vicinity thereof) of the connecting base section 42a. The surrounding wall 42b protrudes, for example, in an axial direction in which the rotation axis Ax2 extends.

The connecting section 46 (second connecting section) is a portion connected to the actuator 130 (second actuator). For example, the output shaft of the speed reducer 134 of the actuator 130 is connected to the connecting section 46. The connecting section 46 may include a connecting base section 46a (second connecting base section) and a surrounding wall 46b (second surrounding wall). A space for accommodating at least a part of the actuator 130 (for example, the speed reducer 134 of the actuator 130) is formed by the connecting base section 46a and the surrounding wall 46b.

The connecting base section 46a is a portion connected to the actuator 130. For example, the output shaft of the speed reducer 134 of the actuator 130 is connected to the connecting base section 46a. The connecting base section 46a may be formed to spread along the plane crossing the rotation axis Ax2. A thickness of at least a part of the connecting base section 46a may not be constant, and at least a part of each of a pair of main surfaces of the connecting base section 46a may not be a plane. A shape of the connecting base section 46a may be circular as viewed from the rotation axis Ax3.

The surrounding wall 46b is a portion protruding from the connecting base section 46a to surround at least a part of the actuator 130. The surrounding wall 46b is formed in an annular shape to surround at least a part of the speed reducer 134, for example. The surrounding wall 46b protrudes in a predetermined direction from an outer edge portion (outer edge and a portion in the vicinity thereof) of the connecting base section 46a. The surrounding wall 46b protrudes, for example, in an axial direction in which the rotation axis Ax3 extends.

The link base section 44 is a portion extending from the connecting section 42 while crossing the rotation axis Ax2. The link base section 44 is connected to the connecting section 46 and also crosses the rotation axis Ax3. The link base section 44 may be formed to spread along the plane crossing the rotation axis Ax2. A thickness of at least a part of the link base section 44 may not be constant, and at least a part of each of a pair of main surfaces of the link base section 44 may not be a plane.

As viewed from the axial directions of the rotation axis Ax2 and the rotation axis Ax3, the link base section 44 is formed to extend along a virtual line segment connecting the rotation axis Ax2 and the rotation axis Ax3. The connecting base section 42a of the connecting section 42 is continued to the link base section 44, and the connecting base section 46a of the connecting section 46 is continued to the link base section 44. The connecting section 42 (the connecting base section 42a and the surrounding wall 42b), the link base section 44, and the connecting section 46 (the connecting base section 46a and the surrounding wall 46b) may be integrally formed.

Here, as viewed from a direction parallel to the rotation axis Ax2 and the rotation axis Ax3, a direction orthogonal to a virtual straight line passing through the rotation axis Ax2 and the rotation axis Ax3 is defined as a "width direction" in the drive link 40. The link base section 44 is formed such that a size in the width direction decreases at a central portion between the rotation axis Ax2 and the rotation axis Ax3. The size of the link base section 44 in the width direction increases as it approaches the connecting section 42, starting from the central portion between the rotation axis Ax2 and the rotation axis Ax3. The size of the link base section 44 in the width direction increases as it approaches the connecting section 46, starting from the central portion between the rotation axis Ax2 and the rotation axis Ax3.

The reinforcing section 48 is formed to increase rigidity while reducing a weight of the drive link 40. The reinforcing section 48 may be formed to protrude from the link base section 44 between the connecting section 42 and an end portion (an end portion close to the rotation axis Ax3) of the link base section 44. For example, the reinforcing section 48 is formed integrally with the link base section 44 to protrude from the link base section 44 between the connecting section 42 and the connecting section 46. The reinforcing section 48 may protrude in the same direction as the surrounding wall 42b and the surrounding wall 46b, and may be connected to the surrounding wall 42b and the surrounding wall 46b.

The reinforcing section 48 includes a protruding section 48a. The protruding section 48a is a portion protruding from the link base section 44 at a position away from each of the connecting section 42 and the end portion of the link base section 44 (the end portion close to the rotation axis Ax3). The protruding section 48a may be formed in an annular shape around an axis Ax0 crossing the link base section 44. The axis Ax0 is a virtual axis that crosses a direction in which the link base section 44 extends and passes through the link base section 44. As viewed from the direction parallel to the rotation axis Ax2 and the rotation axis Ax3, the protruding section 48a surrounds the axis Ax0. The axis Ax0 may pass through a center of gravity of a region defined by an opening edge at an inner edge of the annular protruding section 48a. A length of a line segment connecting the rotation axis Ax2 and the axis Ax0 at a shortest distance may be about 0.8 to 1.2 times a length of a line segment connecting the rotation axis Ax3 and the axis Ax0 at a shortest distance.

At least a part of the protruding section 48a may be formed such that the size in the width direction decreases as it extends away from the link base section 44. Instead of or in addition to the width direction, at least a part of the protruding section 48a may be formed such that the size in the direction in which the link base section 44 extends decreases as a distance from the link base section 44 increases. As viewed from the direction parallel to the rotation axis Ax2 and the rotation axis Ax3, an end surface of the protruding section 48a in the direction parallel to the rotation axis Ax2 and the rotation axis Ax3 (an end surface along the direction crossing the axis Ax0) may be positioned inside an outer edge of the link base section 44. In the width direction, a maximum width of the end surface of the protruding section 48a is smaller than a minimum width of the link base section 44. A protruding height of the protruding section 48a from the link base section 44 may be higher than a protruding height of the surrounding wall 42b from the connecting base section 42a, or may be higher than the protruding height of the surrounding wall 46b from the connecting base section 46a.

The reinforcing section 48 may include one or more ribs 48b. The rib 48b may be formed to protrude from the link base section 44, and may be connected to at least the protruding section 48a. As illustrated in FIG. 4 and the like, the rib 48b may be formed to connect the protruding section 48a and the connecting section 42. One end of the rib 48b may be connected to the protruding section 48a, and the other end of the rib 48b may be connected to the connecting section 42. Unlike the example illustrated in FIG. 4 and the like, the rib 48b may be connected to the protruding section 48a without being connected to the connecting section 42. In one example, the protruding section 48a and the rib 48b protrude in the same direction as the surrounding wall 42b of the connecting section 42, and the rib 48b (the other end of the rib 48b) is connected to the surrounding wall 42b. At least in the direction in which the link base section 44 extends, a protruding height of the rib 48b with respect to the link base section 44 may be increased as a distance from the protruding section 48a decreases. Even in a direction crossing the direction in which the link base section 44 extends, the protruding height of the rib 48b with respect to the link base section 44 may increase as a distance from the protruding section 48a decreases.

The reinforcing section 48 may include one or more ribs 48c (second ribs). The rib 48c may be formed to protrude from the link base section 44, and may be connected to at least the protruding section 48a. As illustrated in FIG. 4 and the like, the rib 48c may be formed to connect the protruding section 48a and the connecting section 46. One end of the rib 48c may be connected to the protruding section 48a, and the other end of the rib 48b may be connected to the connecting section 46. Unlike the example illustrated in FIG. 4 and the like, the rib 48c may be connected to the protruding section 48a without being connected to the connecting section 46. In one example, the protruding section 48a and the rib 48c protrude in the same direction as the surrounding wall 46b of the connecting section 46, and the rib 48c (the other end of the rib 48b) is connected to the surrounding wall 46b. At least in the direction in which the link base section 44 extends, a protruding height of the rib 48c with respect to the link base section 44 may be increased as a distance from the protruding section 48a decreases. Even in the direction crossing the direction in which the link base section 44 extends, the protruding height of the rib 48c with respect to the link base section 44 may increase as a distance from the protruding section 48a decreases.

The reinforcing section 48 may include one of one or more ribs 48b and one or more ribs 48c, or may include both of one or more ribs 48b and one or more ribs 48c. The reinforcing section 48 may include the protruding section 48a without having both of one or more ribs 48b and one or more ribs 48c. Hereinafter, a case where both one or more ribs 48b and one or more ribs 48c are provided will be exemplified.

A protruding height of the end surface of the protruding section 48a which faces away the link base section 44 may be substantially constant. A protruding height of a certain point of the reinforcing section 48 is defined by a shortest distance between that point and a reference position set in the link base section 44, along a line passing through that point and extending in the axial direction of the rotation axis Ax2.

The protruding section 48a may be a solid rib (protrusion) instead of the rib (protrusion) formed in the annular shape. When a section of the protruding section 48a orthogonal to the rotation axis Ax2 is observed, the section may be annular, or may be a solid (state where an inside of an object is clogged). In one example, the reinforcing section 48 includes a plurality of ribs 48b as one or more ribs 48b, and includes a plurality of ribs 48c as one or more ribs 48c.

Each of the plurality of ribs 48b is a rib (protrusion) that connects the protruding section 48a and the surrounding wall 42b of the connecting section 42. Each of the plurality of ribs 48b extends from one of the protruding section 48a and the surrounding wall 42b toward the other. In a case where attention is paid to each rib 48b included in the plurality of ribs 48b, one end of the rib 48b is connected to the protruding section 48a, and the other end of the rib 48b is connected to the surrounding wall 42b.

An interval between the plurality of ribs 48b may increase as the distance from the protruding section 48a increases. The interval between the plurality of ribs 48b is defined by a shortest distance between one rib 48b and another rib 48b in the width direction. In a case where three or more ribs 48b are provided, an interval between at least one any selected pair of ribs 48b may increase as the distance from the protruding section 48a increases. In three or more ribs 48b, for all combinations of the pair of ribs 48b, the interval between the pair of ribs 48b may increase as the distance from the protruding section 48a increases.

For at least a part of the plurality of ribs 48b, the protruding height of the rib 48b may decrease as the distance from the protruding section 48a increases. In other words, for at least a part of the plurality of ribs 48b, the protruding height of the rib 48b may increase as the distance from the protruding section 48a decreases. For all of the plurality of ribs 48b, the protruding height of the rib 48b may decrease as the distance from the protruding section 48a increases.

Each of the plurality of ribs 48c (the plurality of second ribs) is a rib (protrusion) that connects the protruding section 48a and the surrounding wall 46b of the connecting section 46. Each of the plurality of ribs 48c extends from one of the protruding section 48a and the surrounding wall 46b toward the other. In a case where attention is paid to each rib 48c included in the plurality of ribs 48c, one end of the rib 48c is connected to the protruding section 48a, and the other end of the rib 48c is connected to the surrounding wall 46b.

The interval between the plurality of ribs 48c may increase as the distance from the protruding section 48a increases. An interval between the plurality of ribs 48c is defined by a shortest distance between one rib 48c and another rib 48c in the width direction. In a case where three or more ribs 48c are provided, an interval between at least one any selected pair of ribs 48c may increase as the distance from the protruding section 48a increases. In three or more ribs 48c, for all combinations of the pair of ribs 48c, the interval between the pair of ribs 48c may increase as the distance from the protruding section 48a increases.

For at least a part of the plurality of ribs 48c, the protruding height of the rib 48c may decrease as the distance from the protruding section 48a increases. In other words, for at least a part of the plurality of ribs 48c, the protruding height of the rib 48c may increase as the distance from the protruding section 48a decreases. For all of the plurality of ribs 48c, the protruding height of the rib 48c may decrease as the distance from the protruding section 48a increases.

### <Auxiliary Link>

Referring back to FIG. 3, the auxiliary link 50 is a link that rotates as the drive link 40 is driven. The auxiliary link 50 may extend over between the rotation axis Ax2 and the rotation axis Ax3, and may rotate around the rotation axis Ax2 together with the drive link 40. The actuator 120 that rotates the arm link 30 may not be connected to the auxiliary link 50, and the driving force by the actuator 120 may not be directly transmitted. The actuator 130 that rotates the arm link 60 may not be connected to the auxiliary link 50.

Similarly to the drive link 40, the auxiliary link 50 may be formed to extend along a line segment connecting the rotation axis Ax2 and the rotation axis Ax3 at a shortest distance. Each of the actuator 120 and the actuator 130 is positioned between the drive link 40 and the auxiliary link 50. The actuator 120 may be arranged between the connecting section 42 of the drive link 40 and a proximal end portion (an end portion through which the rotation axis Ax2 passes) of the auxiliary link 50. The actuator 130 may be arranged between the connecting section 46 of the drive link 40 and a distal end portion (an end portion through which the rotation axis Ax3 passes) of the auxiliary link 50.

The robot 1 may include a cable harness 90. The cable harness 90 is connected to at least the actuator 120, for example. The cable harness 90 may be connected to at least the actuator 130 via the internal space S2 of the turning link 20. The cable harness 90 may include two or more cables. The cable harness 90 may be connected to at least the actuator 120 and the actuator 130. In the cable harness 90, the cable connected to the actuator 120 may be different from the cable connected to the actuator 130. The cable harness 90 may be physically and electrically connected to each of the actuator 120 and the actuator 130. The cable harness 90 may include at least one of a cable that supplies power to the actuator 120, a cable that supplies power to the actuator 130, a cable that transmits a signal to or/and from the actuator 120, and a cable that transmits a signal to or/and from the actuator 130. The cable harness 90 may be connected to at least the motor 132 via an inside (internal space S2) of the turning link 20. The cable harness 90 may be connected to at least the motor 122 and the motor 132.

The auxiliary link 50 may include a wiring space S5 for guiding the cable harness 90. The wiring space S5 may be a space for guiding the cable harness 90 from the internal space S2 to the actuator 130. The cable harness 90 may be accommodated in the wiring space S5 formed by the auxiliary link 50. The auxiliary link 50 may accommodate the cable harness 90 such that the cable harness 90 is not exposed to an outside.

The opening 24 of the turning link 20 described above may be an opening that allows the internal space S2 of the turning link 20 to communicate with an outside of the internal space S2. The opening 24 may allow the internal space S2 of the turning link 20 to communicate with the wiring space S5. The cable harness 90 may be wired through the opening 24 and the wiring space S5. The opening 66 (second opening) of the arm link 60 described above may be an opening that allows the internal space S6 (second internal space) of the arm link 60 to communicate with an outside of the internal space S6. The opening 66 may allow the internal space S6 of the arm link 60 to communicate with the wiring space S5. The cable harness 90 may be wired from the internal space S2 to the internal space S6 via the opening 24, the wiring space S5, and the opening 66. The wiring space S5 may be a space for guiding the cable harness 90 from the inside of the turning link 20 (internal space S2) to the inside of the arm base portion 62 (internal space S6).

The auxiliary link 50 may be attached to the reinforcing section 48 of the drive link 40. For example, the auxiliary link 50 is fixed to the end surface of the protruding section 48a of the reinforcing section 48 facing the auxiliary link 50 by a fixing member. An internal space S4, which is a space inside the protruding section 48a formed in an annular shape, and the wiring space S5 in the auxiliary link 50 may communicate with each other at a connecting portion between the auxiliary link 50 and the reinforcing section 48.

The auxiliary link 50 may include a link body 52 (sub-link body) and a protruding section 58 (sub-protruding section) (see also FIG. 2). The link body 52 is a body portion of the auxiliary link 50, and is a portion extending over between the rotation axis Ax2 and the rotation axis Ax3. The protruding section 58 is a portion protruding from the link body 52 toward the reinforcing section 48, and may be formed in an annular shape. The protruding section 58 may be attached to the reinforcing section 48 of the drive link 40. The protruding section 58 may include an end surface facing the drive link 40, and the protruding section 58 and the reinforcing section 48 may be fixed to each other in a state where the end surface of the protruding section 58 comes into contact with a corresponding end surface of the protruding section 48a of the reinforcing section 48.

The auxiliary link 50 may be attached to the drive link 40 in a state of not being constrained from the turning link 20 in a direction crossing the rotation axis Ax2. The auxiliary link 50 may be fixed to the drive link 40 in a state where relative movement with respect to the turning link 20 is possible in the direction crossing the rotation axis Ax2. The robot 1 may include a bearing that holds the auxiliary link 50 to rotate around the rotation axis Ax2.

The auxiliary link 50 may be attached to the drive link 40 in a state of not being constrained from the turning link 20 in the direction crossing the rotation axis Ax2 and not being constrained from the arm base portion 62 (arm link 60) in a direction crossing the rotation axis Ax3. The auxiliary link 50 may be fixed to the drive link 40 in a state where the relative movement with respect to the turning link 20 is possible in the direction crossing the rotation axis Ax2 and relative movement with respect to the arm base portion 62 (arm link 60) is possible in the direction crossing the rotation axis Ax3. The robot 1 may include a bearing that holds the auxiliary link 50 to rotate around the rotation axis Ax3.

### [Seal]

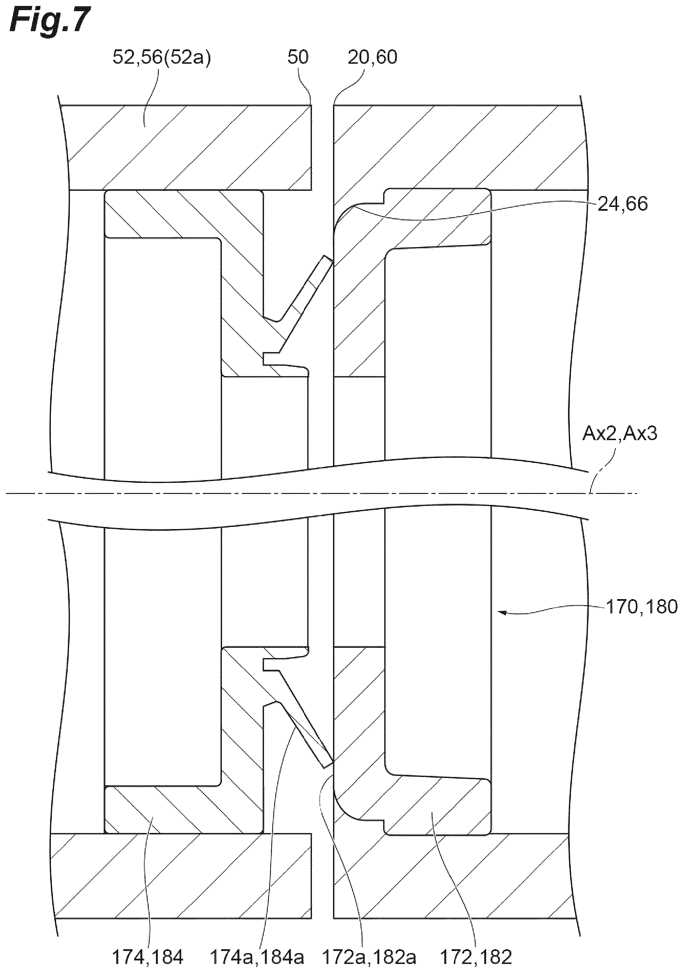

FIG. 7 is an enlarged view of portions indicated by "A" and "B" in FIG. 3, and FIG. 7 schematically illustrates a seal installed between the links. The robot 1 may include a seal 170. The seal 170 is a member (sealing member) interposed between the auxiliary link 50 and the turning link 20 around the opening 24. The seal 170 may be configured to seal between the auxiliary link 50 and the turning link 20 (to close a gap between the auxiliary link 50 and the turning link 20). For example, the seal 170 is interposed at a connecting portion between the auxiliary link 50 and the turning link 20, and thus, it is possible to prevent a liquid such as water from entering the internal space S2 of the turning link 20 from the outside and a liquid such as water from entering the wiring space S5 via the connecting portion.

The seal 170 may be configured to be interposed between the auxiliary link 50 and the turning link 20 (to seal between the auxiliary link 50 and the turning link 20) while allowing the relative displacement between the auxiliary link 50 and the turning link 20 in the direction crossing the rotation axis Ax2. The seal 170 includes, for example, a first member 172 and a second member 174. Each of the first member 172 and the second member 174 is formed in an annular shape around the rotation axis Ax2. The first member 172 and the second member 174 are arranged to face each other in the axial direction of the rotation axis Ax2. The first member 172 is connected to an inner wall surface forming the opening 24 in the turning link 20. The second member 174 is connected to a portion of the proximal end portion of the auxiliary link 50, which is attached to the turning link 20.

The first member 172 and the second member 174 come into contact with each other while allowing relative displacement therebetween. The first member 172 includes a sealing surface 172a. The sealing surface 172a is a surface along a plane crossing the rotation axis Ax2. The sealing surface 172a may be along a plane orthogonal to the rotation axis Ax2. The sealing surface 172a is formed in an annular shape around the rotation axis Ax2.

The second member 174 includes a sealing element 174a. The sealing element 174a is an element (portion) that is displaced along the sealing surface 172a in accordance with the relative displacement between the auxiliary link 50 and the turning link 20 while being in close contact with the sealing surface 172a of the first member 172. The seal 170 is formed such that a state where the sealing element 174a comes into contact with the sealing surface 172a is maintained even though the relative displacement between the auxiliary link 50 and the turning link 20 occurs. The sealing element 174a is formed in an annular shape around the rotation axis Ax2. The sealing element 174a may be formed to spread from a body portion of the second member 174 in a radial direction of a circle with the rotation axis Ax2 as a center in a state of being inclined with respect to the rotation axis Ax2.

The seal 170 including the sealing surface 172a and the sealing element 174a may be formed in any manner. The first member 172 including the sealing surface 172a may be provided on the auxiliary link 50, and the second member 174 including the sealing element 174a may be provided on the turning link 20.

In addition to the seal 170, the robot 1 may include a seal 180 (second seal). The seal 180 is a member (sealing member) interposed between the auxiliary link 50 and the arm base portion 62 of the arm link 60 around the opening 66. The seal 180 may be formed to seal between the auxiliary link 50 and the arm base portion 62 (to close a gap between the auxiliary link 50 and the arm base portion 62). For example, the seal 180 is interposed at a connecting portion between the auxiliary link 50 and the arm base portion 62 of the arm link 60, and thus, it is possible to prevent a liquid such as water from entering the internal space S6 of the arm link 60 from the outside and a liquid such as water from entering the wiring space S5 via the connecting portion.

The seal 180 may be formed to be interposed between the auxiliary link 50 and the arm base portion 62 (to seal between the auxiliary link 50 and the arm base portion 62) while allowing relative displacement between the auxiliary link 50 and the arm base portion 62 in the direction crossing the rotation axis Ax3. The seal 180 includes, for example, a first member 182 and a second member 184. The first member 182 and the second member 184 are arranged to face each other in the axial direction of the rotation axis Ax3. The first member 182 is connected to an inner wall surface forming the opening 66 in the arm base portion 62. The second member 184 is connected to a portion of the distal end portion of the auxiliary link 50, which is attached to the arm base portion 62.

The first member 182 and the second member 184 comes into contact with each other while allowing relative displacement therebetween. The first member 182 includes a sealing surface 182a. The sealing surface 182a is a surface along a plane crossing the rotation axis Ax3. The sealing surface 182a may be along a plane orthogonal to the rotation axis Ax3. The sealing surface 182a is formed in an annular shape around the rotation axis Ax3.

The second member 174 includes a sealing element 184a. The sealing element 184a is an element (portion) that is displaced along the sealing surface 182a in accordance with the relative displacement between the auxiliary link 50 and the arm link 60 while being in close contact with the sealing surface 182a of the first member 182. The seal 180 is formed such that a state where the sealing element 184a comes into contact with the sealing surface 182a is maintained even though the relative displacement between the auxiliary link 50 and the arm link 60 occurs. The sealing element 184a is formed in an annular shape around the rotation axis Ax3. The sealing element 184a may be formed to spread from a body portion of the second member 184 in a radial direction of a circle with the rotation axis Ax3 as a center in a state of being inclined with respect to the rotation axis Ax3.

The seal 180 including the sealing surface 182a and the sealing element 184a may be formed in any manner. The first member 182 including the sealing surface 182a may be provided on the auxiliary link 50, and the second member 184 including the sealing element 184a may be provided on the arm base portion 62.

In a case where the materials forming the drive link 40 and the auxiliary link 50 are different from each other, the deformation of the drive link 40 and the deformation of the auxiliary link 50 due to thermal expansion or the like may be different depending on the difference between the thermal expansion coefficients of the materials. By contrast, since the seal 170 and the seal 180 do not constrain the movement of the auxiliary link 50 in the direction crossing the rotation axis, it is possible to allow a positional deviation (for example, a deviation of the rotation axis) due to the difference in the deformation between the links.

### [Structure for Maintenance of Motor]

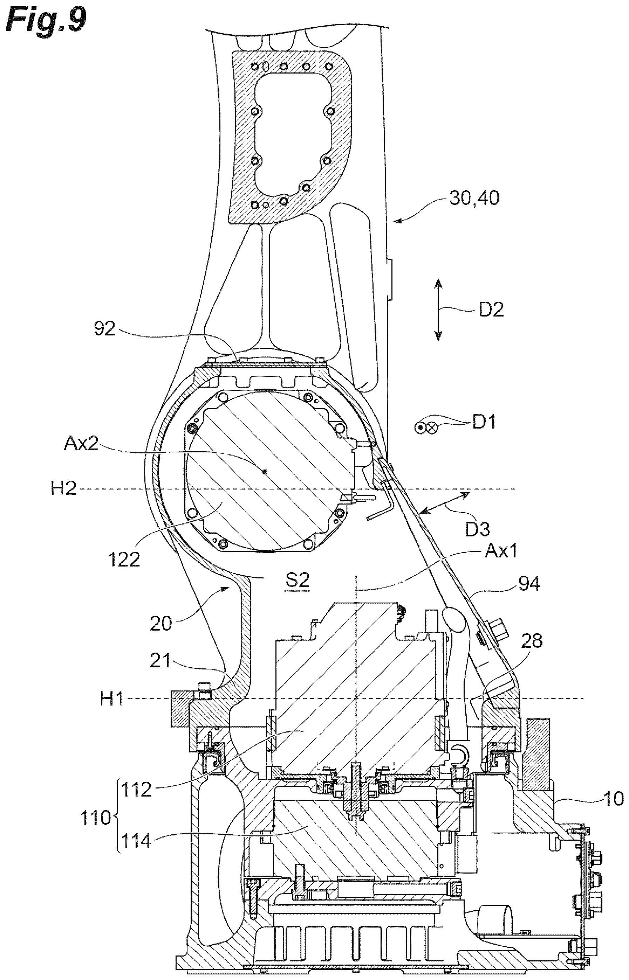

Next, a structure for performing maintenance of a motor of an actuator included in the robot 1 will be described. The maintenance of the motor may include replacement of the motor. FIG. 8 illustrates the robot 1 in a state where some members are moved such that the inside of the turning link 20 can be seen. FIG. 9 is a sectional view illustrating the inside of the turning link 20. FIG. 10 illustrates the robot 1 in a state where some members are moved such that the inside of the arm base portion 62 of the arm link 60 can be seen.

As illustrated in FIG. 8, the opening 24 is provided in the turning link 20. The opening 24 (access opening) may be an opening that allows the motor 122 of the actuator 120 to be taken in and out of the turning link 20 from a direction D1 (first direction) along the rotation axis Ax2. The opening 24 may have a size that allows the motor 122 to be taken in and out. The housing 21 forming the internal space S2 of the turning link 20 may include a pair of side walls crossing the rotation axis Ax2 and a peripheral wall connecting parts of outer edges of the pair of side walls around the rotation axis Ax2. The opening 24 may be provided in the side wall of the pair of side walls, which is closer to the auxiliary link 50.

The motor 122 may be taken in and out of the internal space S2 of the turning link 20 from the direction D1. The direction D1 is, for example, a direction in which the turning link 20 and the drive link 40 are aligned on the rotation axis Ax2. The direction D1 may be orthogonal to a plane including the opening 24 (a plane including an opening edge forming the opening 24). The motor 122 may be inserted into the internal space S2 or may be taken out from the internal space S2 in a state where the output shaft 122b is horizontal and is along the direction D1. The motor 122 is taken in and out by, for example, a worker.

The robot 1 may include an access cover 54. The access cover 54 is a cover that covers the opening 24 provided in the turning link 20. The access cover 54 may be configured to be attached to the turning link 20 to cover the motor 122 from the direction D1, and be detached from the turning link 20 such that the motor 122 can be taken in and out of the turning link 20 from the direction D1. The access cover 54 may be a part of the auxiliary link 50. The proximal end portion of the auxiliary link 50 may function as the access cover 54. When the worker attaches the motor 122, for example, the worker detaches the access cover 54, then the worker inserts the motor 122 into the internal space S2 such that the output shaft 122b is connected to the speed reducer 124 accommodated in the connecting portion 42 of the drive link 40.

In addition to the opening 24, an opening 26 may be provided in the turning link 20 (housing 21). The opening 26 may be provided in the peripheral wall of the housing 21. The opening 26 (check opening) is an opening that allows the actuator 120 to be visually recognized from a direction D2 (second direction) crossing the rotation axis Ax2. The opening 26 allows the worker to visually recognize the motor 122 when the motor 122 is taken in and out. The worker may be able to visually recognize the motor 122 via the opening 26 from the direction D2. The direction D2 is a direction crossing a plane including the opening 26 (a plane including an opening edge forming the opening 26). The opening 26 is formed to be positioned above the motor 122 attached in the internal space S2. At least a part of the component in the direction D2 may be a component directed vertically downward. The opening 26 may have a size that prevents the motor 122 from being taken in and out via the opening.

The robot 1 may include a check cover 92. The check cover 92 is a cover that covers the opening 26 provided in the turning link 20. The check cover 92 may be configured to be attached to the turning link 20 to cover the motor 122 from the direction D2, and to be detached from the turning link 20 to allow the motor 122 to be visually recognized from the direction D2. The check cover 92 may be attached to the turning link 20 to cover the motor 122 from above. When the worker attaches the motor 122, for example, the worker detaches the check cover 92, and performs a work while visually recognizing a state such as the inclination of the output shaft 122b from the opening 26.

The robot 1 may include a check seal 93 (first check seal). The check seal 93 is a sealing member interposed between the check cover 92 and the turning link 20. The check seal 93 may be configured to seal between the check cover 92 and the turning link 20. The check seal 93 is provided, for example, along the opening edge forming the opening 26. By providing the check seal 93, a substance such as a liquid is prevented from entering the internal space S2 from the outside via the connecting portion between the check cover 92 and the turning link 20, and a substance such as a liquid is prevented from leaking from the internal space S2 to the outside.

In addition to the opening 24 and the opening 26, an opening 28 may be formed in the housing 21. The opening 28 (sub-access opening) may be provided in the peripheral wall of the housing 21. The opening 28 is an opening that enables access to the motor 122 from a direction D3 (third direction) crossing both the direction D1 and the direction D2. Being able to access the motor 122 means that the worker himself/herself can touch the motor 122 or a tool operated by the worker can touch the motor 122. The direction D3 is a direction crossing a plane including the opening 28 (a plane including an opening edge forming the opening 28).

The actuator 110 may be accommodated in the internal space S2 in the housing 21. The motor included in the actuator 110 is referred to as "motor 112", and the speed reducer included in the actuator 110 is referred to as "speed reducer 114". The motor 112 (base motor) is accommodated in the turning link 20 and rotates the turning link 20 around the rotation axis Ax1 (base axis). The opening 28 may have a size that allows the motor 112 to be taken in and out of the turning link 20. For example, the worker can insert the motor 112 into the internal space S2 in the turning link 20 and can take out the motor 112 from the internal space S2 via the opening 28.

The robot 1 may include a sub-access cover 94. The sub-access cover 94 is a cover that covers the opening 28 provided in the turning link 20. The sub-access cover 94 may be configured to be attached to the turning link 20 to cover the motor 122 from the direction D3, and be detached from the turning link 20 to allow access to the motor 122 from the direction D3. When the worker attaches the motor 122, for example, the worker detaches the sub-access cover 94, puts his or her hand into the internal space S2 via the opening 28, and performs an attachment work of the motor 122 such that the output shaft 122b of the motor 122 is connected to the speed reducer 124 while supporting the motor 122 from below.

As illustrated in FIG. 9, a lower end of the motor 122 may be positioned above an upper end of the motor 112. An upper edge of the opening 28 may be positioned above the upper end of the motor 112, and a lower edge of the opening 28 may be positioned below an upper end of the motor 122. The upper edge of the opening 28 may be positioned above the lower end of the motor 122. A positional relationship among the motor 112, the motor 122, and the opening 28 means a relationship in a state where the motor 112 and the motor 122 are attached. In FIG. 9, a position of the upper edge of the opening 28 in the axial direction of the rotation axis Ax1 is indicated by "H2", and a position of the lower edge of the opening 28 in the axial direction of the rotation axis Ax1 is indicated by "H1".

As illustrated in FIG. 10, the opening 66 may be provided in the arm base portion 62. The opening 66 (second access opening) may be an opening that allows the motor 132 of the actuator 130 to be taken in and out of the arm base portion 62 from a direction D11 (third direction) along the rotation axis Ax3. The opening 66 may have a size that allows the motor 132 to be taken in and out. The housing 65 in the arm base portion 62 may include at least a pair of side walls crossing the rotation axis Ax3. The opening 66 may be provided on the side wall of the pair of side walls of the housing 65, which is closer to the auxiliary link 50.

The motor 132 may be taken in and out of the internal space S6 of the arm base portion 62 from the direction D11. The direction D11 is, for example, a direction in which the arm base portion 62 and the drive link 40 are aligned on the rotation axis Ax3. The direction D11 may be orthogonal to a plane including the opening 66 (a plane including an opening edge forming the opening 66). The motor 132 may be inserted into the internal space S6 or may be taken out from the internal space S6 in a state where the output shaft 132b is horizontal and along the direction D11. The motor 132 is taken in and out by, for example, a worker.

The robot 1 may include an access cover 56 (second access cover). The access cover 56 is a cover that covers the opening 66. The access cover 56 may be configured to be attached to the arm base portion 62 to cover the motor 132 from the direction D11, and be detached from the arm base portion 62 to allow the motor 132 to be taken in and out from the arm base portion 62 from the direction D11. The access cover 56 may be a part of the auxiliary link 50. The distal end portion of the auxiliary link 50 may function as the access cover 56.

In a case where a part of the auxiliary link 50 functions as the access cover 54 covering the motor 122 and the other part of the auxiliary link 50 functions as the access cover 56 covering the motor 132, the robot 1 includes a connection member 55 constituting the auxiliary link 50 (sub-link). The connection member 55 is a portion that couples the access cover 54 and the access cover 56 of the auxiliary link 50 and extends from the access cover 54 to the access cover 56. For example, the connection member 55 is formed to extend along a line segment connecting the rotation axis Ax2 and the rotation axis Ax3 at the shortest distance, one end of the connection member 55 is connected to the access cover 54, and the other end of the connection member 55 is connected to the access cover 56. The connection member 55 is attached to the drive link 40.

As described above, the auxiliary link 50 may include the link body 52 and the protruding section 58. The link body 52 may be formed by the access cover 54, the access cover 56, and a part of connection member 55, and the protruding section 58 may be formed by another part of the connection member 55. The connection member 55 may be attached to the drive link 40 by fixing the protruding section 58 of the connection member 55 to the reinforcing section 48 (protruding section 48a) of the drive link 40 as described above.

The access cover 54 may be formed by a portion of the link body 52 covering the motor 122 and a portion connected to the seal 170. The seal 170 (first access seal) described above may be interposed between the turning link 20 and the access cover 54 while allowing the rotation of the auxiliary link 50 relative to the turning link 20. The access cover 56 may be formed by a portion of the link body 52 covering the motor 132 and a portion connected to the seal 180. The above-described seal 180 (second access seal) may be interposed between the arm base portion 62 and the access cover 56 while allowing the rotation of the auxiliary link 50 with respect to the arm base portion 62.

When the worker attaches the motor, for example, after the worker detaches the access cover 56, the worker inserts the motor 132 into the internal space S6 such that the output shaft 132b is connected to the speed reducer 134 accommodated in the connecting section 46 of the drive link 40.

In addition to the opening 66, an opening 67 may be provided in the arm base portion 62 (housing 65). The opening 67 (second check opening) allows the motor 132 to be visually recognized from a direction D4 (fourth direction) crossing the rotation axis Ax3. The opening 67 allows the worker to visually recognize the motor 132 when the motor 132 is taken in and out. The worker may be able to visually recognize the motor 132 via the opening 67 from the direction D4. The direction D4 is a direction crossing a plane including the opening 67 (a plane including an opening edge forming the opening 67).

The robot 1 may include a check cover 96 (second check cover). The check cover 96 is a cover that covers the opening 67 provided in the arm base portion 62. The check cover 96 may be configured to be attached to the arm base portion 62 to cover the motor 132 from the direction D4, and be detached from the arm base portion 62 to make the motor 132 visible from the direction D4. When the worker attaches the motor 132, for example, the worker detaches the check cover 96, and performs a work while visually recognizing a state such as the inclination of the output shaft 132b from the opening 67.

The robot 1 may include a check seal 97 (second check seal). The check seal 97 is a sealing member interposed between the check cover 96 and the arm base portion 62. The check seal 97 may be configured to seal between the check cover 96 and the arm base portion 62. The check seal 97 is provided, for example, along an opening edge forming the opening 67. By providing the check seal 97, a substance such as a liquid is prevented from entering the internal space S6 and a substance such as a liquid is prevented from leaking from the internal space S6 to the outside via the connecting portion between the check cover 96 and the arm base portion 62.

The actuator 140 includes a motor 142 (third motor). For example, the motor 142 rotates the turning arm 64 around a rotation axis Ax4 (third rotation axis) with respect to the arm base portion 62, the rotation axis Ax4 is along the direction in which the arm base portion 62 extends. The motor 142 may be accommodated in the arm base portion 62. The motor 142 may be installed such that an output shaft is horizontal.

The motor 142 may be taken in and out of the internal space S6 of the arm base portion 62 from the direction D4(for example, a direction along the rotation axis Ax4). The motor 142 may be inserted into the internal space S6 or may be taken out from the internal space S6 in a state where the output shaft is horizontal and is along the rotation axis Ax4. The motor 142 is taken in and out by, for example, a worker. The opening 67 may have a size that allows the motor 142 to be taken in and out of the arm base portion 62. The worker can visually recognize the motor 132 and the motor 142 may be taken in and out of the arm base portion 62 via the opening 67.

In addition to the opening 66 and the opening 67, an opening 68 may be provided in the arm base portion 62 (housing 65). The opening 68 (third check opening) allows the motor 142 to be visually recognized from a direction D5 crossing the rotation axis Ax4. The opening 68 allows the worker to visually recognize the motor 142 when the motor 142 is taken in and out. The worker may be able to visually recognize the motor 142 via the opening 68 from the direction D5. The direction D5 is a direction crossing a plane including the opening 68 (a plane including an opening edge forming the opening 68).

The robot 1 may include a check cover 98 (third check cover). The check cover 98 is a cover that covers the opening 68 provided in the arm base portion 62. The check cover 98 may be configured to be attached to the arm base portion 62 to cover the motor 142 from the direction D5, and be detached from the arm base portion 62 to allow the motor 142 to be visually recognized from the direction D5. When the worker attaches the motor 142, for example, the worker detaches the check cover 98, and performs a work while visually recognizing a state such as the inclination of the motor 142 from the opening 68.

In the above example, a case where the entire auxiliary link 50 is detached from the other member and the motor 122 and the motor 132 are taken in and out has been described. Instead of the entire auxiliary link 50, the motor 122 and the motor 132 may be taken in and out by detaching a cover portion included in the auxiliary link 50 from the other portion of the auxiliary link 50. As illustrated in FIG. 3, the link body 52 of the auxiliary link 50 may include a body portion 52a and a cover portion 52b (see also FIGS. 7 and 8).

The cover portion 52b may be attached to the body portion 52a via a fixing member 52c. A part of the seal 170 and a part of the seal 180 described above may be provided in the body portion 52a. In a state where the cover portion 52b is detached from the body portion 52a (a state before being attached to the body portion 52a), a worker may perform an attachment work via a fixing member between the protruding section 58 of the auxiliary link 50 and the reinforcing section 48 of the drive link 40. In a state where the cover portion 52b is detached from the body portion 52a in a state of being fixed to the drive link 40 (a state before being attached to the body portion 52a), a worker may perform a work of wiring the cable harness 90.

By detaching the cover portion 52b from the body portion 52a in a state of being fixed to the drive link 40, the motor 122 can be taken in and out via the opened wiring space S5 and opening 24, and the motor 132 can be taken in and out via the opened wiring space S5 and opening 66. Of the cover portion 52b which is a part of the drive link 40, a portion that covers the opening 24 from the direction D1 along the rotation axis Ax2 may function as the access cover 54 described above. Of the cover portion 52b which is a part of the drive link 40, a portion covering the opening 66 from the direction D11 along the rotation axis Ax3 may function as the access cover 56 described above.

### [Modified Example]

In the arm link 30, the drive link 40 and the auxiliary link 50 may be made of the same material. For example, the drive link 40 may be made of a material including aluminum, and the auxiliary link 50 may be made of a material including aluminum. Since the actuator 120 and the actuator 130 are connected to the drive link 40, the influence of heat received from the actuator is different between the drive link 40 and the auxiliary link 50. As a result, even in a case where the drive link 40 and the auxiliary link 50 are made of the same material, the deformation of the drive link 40 and the deformation of the auxiliary link 50 due to the thermal expansion or the like may be different. Thus, even in a case where the drive link 40 and the auxiliary link 50 are made of the same material, the seal 170 and the seal 180 that do not constrain the movement of the auxiliary link 50 in the direction crossing the rotation axis may be provided in order to allow the positional deviation (for example, the deviation of the rotation axis) due to the difference in the deformation between the links.

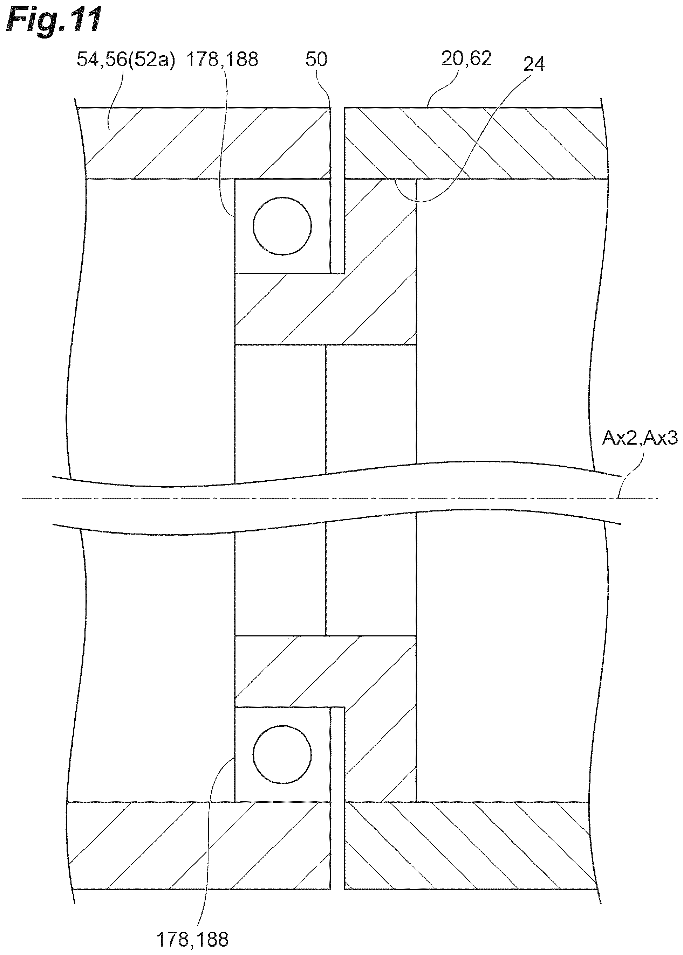

As illustrated in FIG. 11, the robot 1 may include a bearing 178 and a bearing 188 instead of the seal 170 and the seal 180. The bearing 178 is a bearing member that holds the auxiliary link 50 to rotate around the rotation axis Ax2. The bearing 178 is provided, and thus, the relative movement of the auxiliary link 50 with respect to the turning link 20 may be constrained in the direction crossing the rotation axis Ax2.

The bearing 188 (second bearing) is a bearing member that holds the auxiliary link 50 to rotate around the rotation axis Ax3 with respect to the arm base portion 62. The bearing 188 is provided, and thus, the relative movement of the auxiliary link 50 with respect to the arm base portion 62 may be constrained in the direction crossing the rotation axis Ax3. Each of the bearing 178 and the bearing 188 may be any type of bearing member, and is, for example, a ball bearing or a roller bearing. The robot 1 may include the bearing 178 in addition to the seal 170. The robot 1 may include the bearing 188 in addition to the seal 180.

In the example described with reference to FIGS. 1 to 10, the material forming the drive link 40 and the material forming the auxiliary link 50 are different from each other, and the bearing 178 and the bearing 188 are not provided. In a case where the material forming the drive link 40 and the material forming the auxiliary link 50 are different from each other, the bearing 178 and the bearing 188 may be provided. In a case where the material forming the drive link 40 and the material forming the auxiliary link 50 are the same, the bearing 178 and the bearing 188 may not be provided, and the bearing 178 and the bearing 188 may be provided.

### Reference Signs List

1 robot
10 base link
20 turning link
S2 internal space
24, 28 opening
30 arm link
40 drive link
42, 46 connecting section
42a, 46a connecting base section
42b, 46b surrounding wall
44 link base section
48 reinforcing section
48a protruding section
S4 internal space
Ax0 axis
48b, 48c rib
50 auxiliary link
S5 wiring space
52 link body
58 protruding section
54 access cover
55 connection member
56 access cover
60 arm link
62 arm base portion
S6 internal space
66, 67 opening
64 turning arm
90 cable harness
92, 96, 98 check cover
93, 97 check seal
94 sub-access cover
Ax1, Ax2, Ax3, Ax4 rotation axis
110, 120, 130, 140 actuator
112, 122, 132, 142 motor
170, 180 seal
172a, 182a sealing surface
174a, 184a sealing element
178, 188 bearing.

## Claims

1. A robot (1) comprising:
a first link (20);
a second link (30) aligned with the first link (20) along a rotation axis (Ax2) and extending away from the rotation axis (Ax2); and
an actuator (120) accommodated in the first link (20) to rotate the second link (30) around the rotation axis (Ax2) with respect to the first link (20), wherein
the second link (30) includes a first sub-link (40) and a second sub-link (50) that sandwich the actuator (120) along the rotation axis (Ax2),
the first sub-link (40) is attached to the actuator (120),
the second sub-link (50) is attached to the first sub-link (40) in a state where the second sub-link (50) is not constrained from the first link (20) in a direction crossing the rotation axis (Ax2), and
wherein the first link (20) includes
an internal space (S2) configured to accommodate the actuator (120), and
an opening (24) configured to allow the internal space (S2) and an outside of the internal space (S2) to communicate with each other, and
the robot (1) being **characterised in that** it further comprises a seal (170) interposed between the second sub-link (50) and the first link (20) around the opening (24).

2. The robot (1) according to claim 1, further comprising:
a cable harness (90) connected to at least the actuator (120), wherein
the second sub-link (50) includes a wiring space (S5) for guiding the cable harness (90).

3. The robot (1) according to claim 2, wherein
the opening (24) allows the internal space (S2) to communicate with the wiring space (S5), and
the cable harness (90) is wired through the opening (24) and the wiring space (S5).

4. The robot (1) according to any one of claims 1 to 3, wherein
the seal (170) is configured to be interposed between the second sub-link (50) and the first link (20) while allowing relative displacement between the second sub-link (50) and the first link (20) in the direction crossing the rotation axis (Ax2).

5. The robot (1) according to claim 4, wherein
the seal (170) includes
a sealing surface (172a) along a plane crossing the rotation axis (Ax2), and
a sealing element (174a) configured to be displaced along the sealing surface (172a) in accordance with the relative displacement between the second sub-link (50) and the first link (20) while being in close contact with the sealing surface (172a).

6. The robot (1) according to claim 1, further comprising:
a third link (60,62) aligned with the second link (30) along a second rotation axis (Ax3) parallel to the rotation axis (Ax2) and extending away from the second rotation axis (Ax3); and
a second actuator (130) accommodated in the third link (60,62) to rotate the third link (60,62) with respect to the second link (30), wherein
the first sub-link (40) and the second sub-link (50) sandwich the second actuator (130) along the second rotation axis (Ax3),
the first sub-link (40) is attached to the second actuator (130), and
the second sub-link (50) is attached to the first sub-link (40) in a state of not being constrained from the first link (20) in the direction crossing the rotation axis (Ax2) and not being constrained from the third link (60,62) in a direction crossing the second rotation axis (Ax3).

7. The robot (1) according to claim 6, wherein
the third link (60,62) includes
a second internal space (S6) configured to accommodate the second actuator (130), and
a second opening (66) configured to allow the second internal space (S6) and an outside of the second internal space (S6) to communicate with each other, and
the robot (1) further comprises
a second seal (180) interposed between the second sub-link (50) and the third link (60,62) around the second opening (66).

8. The robot (1) according to claim 7, further comprising:
a cable harness (90) connected to at least the second actuator (130) via the internal space (S2), wherein
the second sub-link (50) includes a wiring space (S5) for guiding the cable harness (90) from the internal space (S2) to the second actuator (130).

9. The robot (1) according to claim 8, wherein
the opening (24) allows the internal space (S2) to communicate with the wiring space (S5),
the second opening (66) allows the second internal space (S6) to communicate with the wiring space (S5), and
the cable harness (90) is wired from the internal space (S2) to the second internal space (S6) through the opening (24), the wiring space (S5), and the second opening (66).

10. The robot (1) according to any one of claims 7 to 9, wherein
the seal (170) is configured to be interposed between the second sub-link (50) and the first link (20) while allowing relative displacement between the second sub-link (50) and the first link (20) in the direction crossing the rotation axis (Ax2), and
the second seal (180) is configured to be interposed between the second sub-link (50) and the third link (60,62) while allowing relative displacement between the second sub-link (50) and the third link (60,62) in a direction crossing the second rotation axis (Ax3).

11. The robot (1) according to any one of claims 1 to 10, further comprising:
a base link (10) fixed to an installation surface, wherein
the first link (20) is connected to the base link (10) to rotate around a turning axis (Ax1) crossing the rotation axis (Ax2).

12. The robot (1) according to any one of claims 1 to 11, wherein
the first sub-link (40) is made of a first material, and
the second sub-link (50) is made of a second material having rigidity and specific gravity smaller than the first material.

## Patentansprüche

1. Ein Roboter (1), der aufweist:
ein erstes Glied (20);
ein zweites Glied (30), das entlang einer Rotationsachse (Ax2) mit dem ersten Glied (20) ausgerichtet ist und sich von der Rotationsachse (Ax2) weg erstreckt; und
einen Aktuator (120), der in dem ersten Glied (20) aufgenommen ist, um das zweite Glied (30) um die Rotationsachse (Ax2) relativ zu dem ersten Glied (20) zu rotieren, wobei
das zweite Glied (30) ein erstes Teilglied (40) und ein zweites Teilglied (50) aufweist, die den Aktuator (120) sandwichartig zwischen diesen entlang der Rotationsachse (Ax2) anordnen,
das erste Teilglied (40) an dem Aktuator (120) angebracht ist,
das zweite Teilglied (50) an dem ersten Teilglied (40) in einem Zustand angebracht ist, in dem das zweite Teilglied (50) von dem ersten Glied (20) in einer Richtung, die die Rotationsachse (Ax2) kreuzt, nicht eingeschränkt ist, und
wobei das erste Glied (20) aufweist:
einen Innenraum (S2), der konfiguriert ist, um den Aktuator (120) aufzunehmen, und
eine Öffnung (24), die konfiguriert ist, um dem Innenraum (S2) und einem Äußeren des Innenraums (S2) zu erlauben, miteinander zu kommunizieren, und
wobei der Roboter (1) **dadurch gekennzeichnet ist, dass** er ferner eine Dichtung (170) aufweist, die zwischen dem zweiten Teilglied (50) und dem ersten Glied (20) um die Öffnung (24) herum angeordnet ist.

2. Der Roboter (1) gemäß Anspruch 1, der aufweist:
einen Kabelstrang (90), der zumindest mit dem Aktuator (120) verbunden ist, wobei
das zweite Teilglied (50) einen Verkabelungsraum (S5) zum Führen des Kabelstrangs (90) aufweist.

3. Der Roboter (1) gemäß Anspruch 2, wobei
die Öffnung (24) erlaubt, dass der Innenraum (S2) mit dem Verkabelungsraum (S5) kommuniziert, und
der Kabelstrang (90) durch die Öffnung (24) und den Verkabelungsraum (S5) verkabelt ist.

4. Der Roboter (1) gemäß irgendeinem der Ansprüche 1 bis 3, wobei
die Dichtung (170) konfiguriert ist, um zwischen dem zweiten Teilglied (50) und dem ersten Glied (20) zwischengeordnet zu sein und gleichzeitig eine relative Verschiebung zu erlauben zwischen dem zweiten Teilglied (50) und dem ersten Glied (20) in der Richtung, die die Rotationsachse (Ax2) kreuzt.

5. Der Roboter (1) gemäß Anspruch 4, wobei
die Dichtung (170) aufweist:
eine Dichtungsfläche (172a) entlang einer Ebene, die die Rotationsachse (Ax2) kreuzt, und
ein Dichtungselement (174a), das konfiguriert ist, um entlang der Dichtungsfläche (172a) gemäß der relativen Verschiebung zwischen dem zweiten Teilglied (50) und dem ersten Glied (20) verschoben zu werden und gleichzeitig in engem Kontakt mit der Dichtungsfläche (172a) zu sein.

6. Der Roboter (1) gemäß Anspruch 1, der ferner aufweist:
ein drittes Glied (60, 62), das mit dem zweiten Glied (30) entlang einer zweiten Rotationsachse (Ax3) parallel zur Rotationsachse (Ax2) ausgerichtet ist und sich von der zweiten Rotationsachse (Ax3) weg erstreckt; und
einen zweiten Aktuator (130), der in dem dritten Glied (60, 62) aufgenommen ist, um das dritte Glied (60, 62) bezüglich des zweiten Glieds (30) zu rotieren, wobei
das erste Teilglied (40) und das zweite Teilglied (50) zwischen diesen den zweiten Aktuator (130) entlang der zweiten Rotationsachse (Ax3) sandwichartig anordnen,
das erste Teilglied (40) an dem zweiten Aktuator (130) angebracht ist, und
das zweite Teilglied (50) an dem ersten Teilglied (40) in einem Zustand angebracht ist, in dem es von dem ersten Glied (20) in der Richtung, welche die Rotationsachse (Ax2) kreuzt, nicht eingeschränkt ist und von dem dritten Glied (60, 62) in einer Richtung, welche die zweite Rotationsachse (Ax3) kreuzt, nicht eingeschränkt ist.

7. Der Roboter (1) gemäß Anspruch 6, wobei
das dritte Glied (60, 62) aufweist:
einen zweiten Innenraum (S6), der konfiguriert ist, um den zweiten Aktuator (130) aufzunehmen, und
eine zweite Öffnung (66), die konfiguriert ist, um dem zweiten Innenraum (S6) und einem Äußeren des zweiten Innenraums (S6) zu erlauben miteinander zu kommunizieren, und
der Roboter (1) ferner aufweist:
eine zweite Dichtung (180), die zwischen dem zweiten Teilglied (50) und dem dritten Glied (60, 62) um die zweite Öffnung (66) herum zwischengeordnet ist.

8. Der Roboter (1) gemäß Anspruch 7, der ferner aufweist:
einen Kabelstrang (90), der über den Innenraum (S2) mit zumindest dem zweiten Aktuator (130) verbunden ist, wobei
das zweite Teilglied (50) einen Verkabelungsraum (S5) aufweist zum Führen des Kabelstrangs (90) vom Innenraum (S2) zum zweiten Aktuator (130).

9. Der Roboter (1) gemäß Anspruch 8, wobei
die Öffnung (24) dem Innenraum (S2) erlaubt, mit dem Verkabelungsraum (S5) zu kommunizieren,
die zweite Öffnung (66) dem zweiten Innenraum (S6) erlaubt, mit dem Verkabelungsraum (S5) zu kommunizieren, und
der Kabelstrang (90) vom Innenraum (S2) zum zweiten Innenraum (S6) durch die Öffnung (24), den Verkabelungsraum (S5) und die zweite Öffnung (66) verkabelt ist.

10. Der Roboter (1) gemäß irgendeinem der Ansprüche 7 bis 9, wobei
die Dichtung (170) konfiguriert ist, um zwischen dem zweiten Teilglied (50) und dem ersten Glied (20) zwischengeordnet zu sein und gleichzeitig eine relative Verschiebung zwischen dem zweiten Teilglied (50) und dem ersten Glied (20) in der Richtung erlaubt, welche die Rotationsachse (Ax2) kreuzt, und
die zweite Dichtung (180) konfiguriert ist, um zwischen dem zweiten Teilglied (50) und dem dritten Glied (60, 62) zwischengeordnet zu sein und gleichzeitig eine relative Verschiebung zwischen dem zweiten Teilglied (50) und dem dritten Glied (60, 62) in einer Richtung erlaubt, welche die zweite Rotationsachse (Ax3) kreuzt.

11. Der Roboter (1) gemäß irgendeinem der Ansprüche 1 bis 10, der ferner aufweist:
ein Basisglied (10), das an einer Installationsfläche befestigt ist, wobei
das erste Glied (20) mit dem Basisglied (10) verbunden ist, um sich um eine Drehachse (Ax1) zu rotieren, welche die Rotationsachse (Ax2) kreuzt.

12. Der Roboter (1) gemäß irgendeinem der Ansprüche 1 bis 11, wobei
das erste Teilglied (40) aus einem ersten Material hergestellt ist und
das zweite Teilglied (50) aus einem zweiten Material hergestellt ist, das Steifigkeit und spezifische Dichte geringer als das erste Material hat.

## Revendications

1. Robot (1) comprenant :
un premier maillon (20) ;
un deuxième maillon (30) aligné avec le premier maillon (20) le long d'un axe de rotation (Ax2) et s'étendant en s'éloignant de l'axe de rotation (Ax2) ; et
un actionneur (120) logé dans le premier maillon (20) pour faire tourner le deuxième maillon (30) autour de l'axe de rotation (Ax2) par rapport au premier maillon (20),
dans lequel :
le deuxième maillon (30) comprend un premier sous-maillon (40) et un deuxième sous-maillon (50) disposés de part et d'autre de l'actionneur (120) le long de l'axe de rotation (Ax2),
le premier sous-maillon (40) est attaché à l'actionneur (120),
le deuxième sous-maillon (50) est attaché au premier sous-maillon (40) dans un état où le deuxième sous-maillon (50) n'est pas contraint par le premier maillon (20) dans une direction croisant l'axe de rotation (Ax2), et
dans lequel le premier maillon (20) comprend :
un espace interne (S2) configuré pour loger l'actionneur (120), et
une ouverture (24) configurée pour permettre la communication entre l'espace interne (S2) et l'extérieur de l'espace interne (S2), et
le robot (1) étant **caractérisé en ce qu'**il comprend en outre un joint d'étanchéité (170) interposé entre le deuxième sous-maillon (50) et le premier maillon (20) autour de l'ouverture (24).

2. Le robot (1) selon la revendication 1, comprenant en outre :
un faisceau de câbles (90) connecté au moins à l'actionneur (120), et dans lequel
le deuxième sous-maillon (50) comprend un espace de câblage (S5) pour guider le faisceau de câbles (90).

3. Le robot (1) selon la revendication 2, dans lequel :
l'ouverture (24) permet la communication entre l'espace interne (S2) et l'espace de câblage (S5), et
le faisceau de câbles (90) est câblé à travers l'ouverture (24) et l'espace de câblage (S5).

4. Le robot (1) selon l'une quelconque des revendications 1 à 3, dans lequel :
le joint d'étanchéité (170) est configuré pour être interposé entre le deuxième sous-maillon (50) et le premier maillon (20) tout en permettant un déplacement relatif entre le deuxième sous-maillon (50) et le premier maillon (20) dans la direction croisant l'axe de rotation (Ax2).

5. Le robot (1) selon la revendication 4, dans lequel :
le joint d'étanchéité (170) comprend :
une surface d'étanchéité (172a) le long d'un plan croisant l'axe de rotation (Ax2), et
un élément d'étanchéité (174a) configuré pour être déplacé le long de la surface d'étanchéité (172a) en fonction du déplacement relatif entre le deuxième sous-maillon (50) et le premier maillon (20) tout en restant en contact étroit avec la surface d'étanchéité (172a).

6. Le robot (1) selon la revendication 1, comprenant en outre :
un troisième maillon (60,62) aligné avec le deuxième maillon (30) le long d'un second axe de rotation (Ax3) parallèle à l'axe de rotation (Ax2) et s'étendant en s'éloignant du second axe de rotation (Ax3) ; et
un second actionneur (130) logé dans le troisième maillon (60,62) pour faire tourner le troisième maillon (60,62) par rapport au deuxième maillon (30),
dans lequel :
le premier sous-maillon (40) et le deuxième sous-maillon (50) sont disposés de part et d'autre du second actionneur (130) le long du second axe de rotation (Ax3),
le premier sous-maillon (40) est attaché au second actionneur (130), et
le deuxième sous-maillon (50) est attaché au premier sous-maillon (40) dans un état où le deuxième sous-maillon (50) n'est pas contraint par le premier maillon (20) dans la direction croisant l'axe de rotation (Ax2) et n'est pas contraint par le troisième maillon (60,62) dans une direction croisant le second axe de rotation (Ax3).

7. Le robot (1) selon la revendication 6, dans lequel :
le troisième maillon (60,62) comprend :
un second espace interne (S6) configuré pour loger le second actionneur (130), et
une seconde ouverture (66) configurée pour permettre la communication entre le second espace interne (S6) et l'extérieur du second espace interne (S6), et
le robot (1) comprend en outre:
un second joint d'étanchéité (180) interposé entre le deuxième sous-maillon (50) et le troisième maillon (60,62) autour de la seconde ouverture (66).

8. Le robot (1) selon la revendication 7, comprenant en outre :
un faisceau de câbles (90) connecté au moins au second actionneur (130) via l'espace interne (S2), et dans lequel
le deuxième sous-maillon (50) comprend un espace de câblage (S5) pour guider le faisceau de câbles (90) depuis l'espace interne (S2) jusqu'au second actionneur (130).

9. Le robot (1) selon la revendication 8, dans lequel :
l'ouverture (24) permet la communication entre l'espace interne (S2) et l'espace de câblage (S5),
la seconde ouverture (66) permet la communication entre le second espace interne (S6) et l'espace de câblage (S5), et
le faisceau de câbles (90) est câblé depuis l'espace interne (S2) jusqu'au second espace interne (S6) à travers l'ouverture (24), l'espace de câblage (S5) et la seconde ouverture (66).

10. Le robot (1) selon l'une quelconque des revendications 7 à 9, dans lequel :
le joint d'étanchéité (170) est configuré pour être interposé entre le deuxième sous-maillon (50) et le premier maillon (20) tout en permettant un déplacement relatif entre le deuxième sous-maillon (50) et le premier maillon (20) dans la direction croisant l'axe de rotation (Ax2), et
le second joint d'étanchéité (180) est configuré pour être interposé entre le deuxième sous-maillon (50) et le troisième maillon (60,62) tout en permettant un déplacement relatif entre le deuxième sous-maillon (50) et le troisième maillon (60,62) dans une direction croisant le second axe de rotation (Ax3).

11. Le robot (1) selon l'une quelconque des revendications 1 à 10, comprenant en outre :
un maillon de base (10) fixé à une surface d'installation, et dans lequel
le premier maillon (20) est relié au maillon de base (10) de manière à pivoter autour d'un axe de pivotement (Ax1) croisant l'axe de rotation (Ax2).

12. Le robot (1) selon l'une quelconque des revendications 1 à 11, dans lequel :
le premier sous-maillon (40) est constitué d'un premier matériau, et
le deuxième sous-maillon (50) est constitué d'un second matériau ayant une rigidité et une masse volumique inférieures à celles du premier matériau.
